# EUROPÄISCHE PATENTSCHRIFT

(11) **EP 3 318 470 B1**
(45) Veröffentlichungstag und Bekanntmachung des Hinweises auf die Patenterteilung: **23.06.2021**
(21) Anmeldenummer: 17185065.4
(22) Anmeldetag: 07.08.2017
(51) Int. Cl.: B62D 15/02, G08G 1/16

(54) **VERFAHREN ZUR AUSWAHL EINER PARKZONE AUS EINER MEHRZAHL VON PARKZONEN FÜR EIN KRAFTFAHRZEUG INNERHALB EINES PARKBEREICHS, PARKASSISTENZSYSTEM FÜR EIN KRAFTFAHRZEUG UND KRAFTFAHRZEUG MIT EINEM PARKASSISTENZSYSTEM**
METHOD FOR SELECTING A PARKING ZONE FROM A PLURALITY OF PARKING ZONES FOR A MOTOR VEHICLE WITHIN A PARK AREA, PARKING ASSISTANCE SYSTEM FOR A MOTOR VEHICLE AND MOTOR VEHICLE WITH A PARKING ASSISTANCE SYSTEM
PROCÉDÉ DE SÉLECTION D'UNE ZONE DE PARKING À PARTIR D'UNE PLURALITÉ DE ZONES DE PARKING POUR UN VÉHICULE AUTOMOBILE DANS UNE ZONE DE PARKING, SYSTÈME D'ASSISTANCE AU STATIONNEMENT POUR UN VÉHICULE ET VÉHICULE POURVU D'UN SYSTÈME D'ASSISTANCE AU STATIONNEMENT

(30) Priorität: 02.11.2016 DE 102016120810
(43) Veröffentlichungstag der Anmeldung: 09.05.2018
(73) Patentinhaber: Valeo Schalter und Sensoren GmbH, 74321 Bietigheim-Bissingen (DE)
(72) Erfinder: Menaka, Eduardo, 74321 Bietigheim-Bissingen (DE); Abbruzzesi, Fabio, 74321 Bietigheim-Bissingen (DE)
(74) Vertreter: Pothmann, Karsten

(56) Entgegenhaltungen:
- DE-A1-102009 046 726
- DE-A1-102014 014 242
- DE-A1-102015 002 438
- US-A1- 2015 348 414

## Beschreibung

Die vorliegende Erfindung betrifft ein Verfahren zum Durchführen eines zumindest semi-autonomen Parkvorgangs eines Kraftfahrzeugs in einen Parkbereich. Des Weiteren betrifft die Erfindung ein Parkassistenzsystem für ein Kraftfahrzeug sowie ein Kraftfahrzeug mit einem Parkassistenzsystem.

Aus dem Stand der Technik sind bereits solche Verfahren und Parkassistenzsysteme hinlänglich bekannt. Die DE 10 2008 033 925 A1 offenbart einen Garagenassistenten zur Einparkunterstützung eines Fahrzeugs in eine Garage oder eine Parklücke. Der Assistent weist eine Umfeldsensorik zur automatischen Erfassung von Raumverhältnissen und eine Fernsteuerung zum Aktivieren eines Einparkvorgangs auf. Der Einparkvorgang wird über eine Schnittstelle visuell auf ein mobiles Endgerät übertragen und ist dort auf einem Display beobachtbar. Nachteilig hierbei ist, dass ein Abstand zu einer Begrenzung der Garage beziehungsweise der Parklücke nur in Fahrzeuglängsrichtung und nur durch einen Nutzer vorgebbar ist und die Parkmöglichkeiten eingeschränkt sind.

Des Weiteren offenbart die DE 10 2008 028 763 A1 ein Verfahren und eine Vorrichtung zur Unterstützung eines Einparkvorganges eines Fahrzeuges in einen quer zu einer Fahrbahn angeordneten Parkplatz, der auf wenigstens einer Seite durch eine seitliche Begrenzung begrenzt ist, wobei der Parkplatz mittels einer Messeinrichtung vermessen, eine Parkposition des Fahrzeugs innerhalb des Parkplatzes mittels einer Auswerteeinrichtung festgelegt und eine Einparkbahn des Fahrzeugs in die Parkposition mittels der Auswerteeinrichtung bestimmt wird. Um die Unterstützung des Einparkvorganges bei Parkplätzen zu verbessern, wird die Parkposition zumindest bei Überschreiten einer vorgegebenen Mindestbreite des Parkplatzes von der Auswerteeinrichtung in einem seitlichen Abstand zur Mittellängsachse des Parkplatzes festgelegt. Um dieses Verfahren durchführen zu können, ist es erforderlich, dass das Kraftfahrzeug an dem Parkplatz vorbeifährt und den Parkplatz entsprechend vermisst. Erst nach dem Vorbeifahren und dem Vermessen des Parkplatzes ist die Unterstützung des Einparkvorganges möglich. Des Weiteren wird die Parkzone durch die Auswerteeinrichtung festgelegt.

Die DE 10 2014 014 242 A1 zeigt ein Verfahren zum Betrieb eines Assistenzsystems zur Unterstützung eines Parkvorgangs eines Kraftfahrzeugs, umfassend die Schritte: - Bereitstellen von Umfelddaten, die wenigstens einen potentiell durch das Kraftfahrzeug befahrbaren Parkbereich im Umfeld des Kraftfahrzeugs betreffen, an das Assistenzsystem, - Übertragen der Umfelddaten und/oder von aus den Umfelddaten berechneten Daten an eine von dem Kraftfahrzeug separat ausgebildete Kommunikationseinrichtung, - Anzeige einer in Abhängigkeit der Umfelddaten und/oder der berechneten Daten ermittelten, graphischen Darstellung des Parkbereichs durch die Kommunikationseinrichtung, - Erfassen wenigstens einer an der Kommunikationseinrichtung vorgenommenen, den Parkvorgang betreffenden Bedieneingabe, - Bestimmen einer eine Zielposition und/oder eine Zielausrichtung des Kraftfahrzeugs in dem Parkbereich oder in einem der Parkbereiche beschreibenden Zielpose, in die das Kraftfahrzeug durch den Parkvorgang geführt werden soll, in Abhängigkeit der erfassten Bedieneingabe, und - Führen des Kraftfahrzeugs in die Zielpose durch zumindest teilautomatisierte Längs- und/oder Querführung des Kraftfahrzeugs und/oder Gabe von Fahrhinweisen an einen Fahrer des Kraftfahrzeugs zur Führung des Kraftfahrzeugs in die Zielpose.

Die DE 10 2009 046 726 A1 ist als nächstliegender Stand der Technik nach dem Oberbegriff des Anspruchs 1 zu sehen und zeigt ein Verfahren zur Erfassung von Parklücken und Auswahl einer Parklücke, folgende Schritte umfassend: (a) Erfassen der Geometrie einer zum Parken geeigneten freien Fläche mit einer konturerfassenden Sensorik, (b) Anzeigen von geeigneten freien Flächen als mögliche Parklücke, (c) Auswahl einer geeigneten Parklücke.

Die DE 10 2015 002 438 A1 zeigt ein Verfahren zum Betreiben eines Kraftfahrzeugs für ein Durchführen eines automatischen Parkvorgangs mit den Schritten: a) fortlaufendes Erfassen von Umgebungsdaten einer Umgebung des Kraftfahrzeugs während einer Fortbewegung des Kraftfahrzeugs in einer Fahrtrichtung mit einer Geschwindigkeit nur unterhalb eines vorbestimmten Grenzwerts; und b) unter der Bedingung, dass eine vom Benutzer durchgeführte vorbestimmte erste Bedienhandlung erfasst wird, Anzeigen von Ergebnissen des in Schritt a) durchgeführten Erfassens als schematische Darstellung auf einer Anzeigeeinrichtung des Kraftfahrzeugs.

Aufgabe der vorliegenden Erfindung ist es, ein Verfahren, ein Parkassistenzsystem und ein Kraftfahrzeug bereitzustellen, welches es ermöglicht, Nutzerindividuelle Interessen bei einem zumindest semi-autonomen Parkvorgang besser zu berücksichtigen.

Diese Aufgabe wird durch ein Verfahren, ein Parkassistenzsystem und ein Kraftfahrzeug gemäß den unabhängigen Ansprüchen gelöst.

Bei einem erfindungsgemäßen Verfahren zum Durchführen eines zumindest semi-autonomen Parkvorgangs eines Kraftfahrzeugs in einen Parkbereich werden die Ausmaße des Parkbereichs mit zumindest einer Detektionsvorrichtung des Kraftfahrzeugs erfasst. Ein wesentlicher Gedanke der Erfindung ist insbesondere darin zu sehen, dass abhängig von den erfassten Ausmaßen des Parkbereichs und abhängig von Ausmaßen des Kraftfahrzeugs eine Mehrzahl von Parkzonen für das Kraftfahrzeug in dem Parkbereich bestimmt wird und die Mehrzahl der Parkzonen auf einer Anzeigeeinheit angezeigt wird und eine der angezeigten Parkzonen durch einen Nutzer ausgewählt wird. Durch das Anzeigen der Mehrzahl der Parkzonen des Parkbereichs ist es ermöglicht, dass der Nutzer, welcher die Mehrzahl der Parkzonen auf der Anzeigeeinheit angezeigt wird, eine Auswahl der Parkzone treffen kann, in welcher das Kraftfahrzeug eingeparkt werden soll. Dadurch werden bei alternativen, systemseitig bestimmten Parkmöglichkeiten die Interessen des Nutzers für das tatsächliche Parken verbessert berücksichtigt. Gerade dann, wenn der Nutzer weitere Informationen hat, wie Parkzonen in dem Parkbereich nach dem Parken des Kraftfahrzeugs genutzt werden sollen, kann ein darauf abgestimmtes Abstellen eines Kraftfahrzeugs erfolgen. Dadurch wird ein situationsangepassteres Nutzen des Parkbereichs erreicht. Nach der Auswahl der gewünschten Parkzone durch den Nutzer kann eine angepasste Trajektorie berechnet werden, die das Kraftfahrzeug zu einer Parkposition führt. Dies hat den Vorteil gegenüber dem jetzigen Stand der Technik, dass ein dynamisches Erfassen mittels bspw. Ultraschallsensoren beim Parkvorgang nicht mehr notwendig ist, da die gesamte Trajektorie bereits vor dem Parkvorgang berechnet wurde. Ein weiterer Vorteil ist darin zu sehen, dass es nicht erforderlich ist an einem Parkbereich vorbeizufahren und diesen zu vermessen. Anhand der Dimensionen, die durch die Detektionsvorrichtung erfasst werden, bestimmt das System die möglichen Parkzonen ohne eine Nachvermessung. Der Nutzer kann dann auf der Anzeigeeinheit die bevorzugte Parkzone auswählen.

Werden abhängig von einer Breite des Parkbereichs beispielsweise zumindest zwei Parkzonen nebeneinander bestimmt, werden diese, insbesondere gleichzeitig, auf der Anzeigeeinheit angezeigt und eine Person bzw. ein Nutzer kann dann selbst diejenige auswählen, in welche dann das Kraftfahrzeug einparken soll. Bei einem Parkbereich bei dem in Breitenrichtung zumindest zwei Parkzonen für das zu parkenden Kraftfahrzeug bestimmt wurden, kann der Nutzer somit beispielsweise eine linke oder eine rechte Parkzone auswählen. Dies kann beispielsweise von Vorteil sein, wenn später ein zweites Fahrzeug in den Parkbereich einfahren möchte beziehungsweise wenn dort im Nachhinein weitere Gegenstände auf die andere Parkzone (Fahrräder, Reifen, etc.) abgestellt werden sollen. Somit kann der Nutzer bereits im Vorfeld eine Entscheidung darüber treffen, auf welche Parkzone das Kraftfahrzeug eingeparkt werden soll.

Insbesondere kann vorgesehen sein, dass die Detektionsvorrichtung in einem Front- und/oder einem Heckbereich des Kraftfahrzeugs angeordnet ist. Dadurch werden besonders relevante Umgebungsbereiche erfasst und gerade dann, wenn das zu parkende Kraftfahrzeug in vorteilhafter Position mit seiner Längsachse in Richtung oder im Wesentlichen in Richtung des Parkbereichs orientiert ist, kann der Parkbereich sehr genau und vollständig erfasst werden.

Weiter kann vorgesehen sein, dass die Detektionsvorrichtung mit dem Erfassen der Ausmaße des Parkbereichs, insbesondere zumindest den Ausmaßen eines Bodenbereichs des Parkbereichs, nach einem Startsignal beginnt. Das Startsignal kann dabei beispielsweise manuell über eine manuell bedienbare Startvorrichtung eingegeben werden. Beispielsweise kann ein Bedienelement innerhalb des Fahrzeuges als Startvorrichtung angeordnet sein, sodass der Nutzer über ein Betätigen des Bedienelements das Startsignal an die Detektionsvorrichtung sendet, sodass die Detektionsvorrichtung mit dem Erfassen der Ausmaße des Parkbereiches beginnt. Ebenfalls möglich ist, dass eine Startvorrichtung über eine Funkverbindung verfügt, sodass auch innerhalb beziehungsweise außerhalb des Kraftfahrzeugs das Startsignal gegeben werden kann. Beispielsweise könnte als Startvorrichtung ein Zündschlüssel verwendet werden, der ebenfalls durch Betätigen eines Bedienelements das Startsignal zum Erfassen der Ausmaße des Parkbereichs nutzen kann. Ebenfalls möglich ist, dass das Startsignal nach dem Empfang eines automatisch generierten Signals vorgegeben wird. Beispielsweise ist hier eine Kopplung mit einem Navigationssystem möglich, sodass bei Erreichen eines bestimmten vorgegebenen geographischen Ortes die Detektionsvorrichtung automatisch mit dem Erfassen der Ausmaße des Parkbereichs beginnt. Dies kann beispielsweise ebenfalls gekoppelt sein mit einer Nachhausekomm-Funktion (Coming-home-Funktion), sodass hierdurch auf sehr einfache und für den Nutzer aufwandsminimierte Weise das Verfahren durchgeführt werden kann.

Die Abmessungen, wie Höhe und/oder Breite und/oder Länge, des Kraftfahrzeugs können dabei insbesondere auf einer Steuereinrichtung des Kraftfahrzeugs gespeichert werden, und auf Basis der gespeicherten Abmessungen des Kraftfahrzeugs und auf Basis der erfassten Abmessungen des Parkbereichs kann die Mehrzahl von Parkzonen für das Kraftfahrzeug bestimmt werden. Ebenfalls möglich ist, dass die Abmessungen des Kraftfahrzeugs manuell in die Steuereinrichtung eingegeben werden und ebenfalls auf Basis der eingegebenen Abmessungen des Kraftfahrzeugs und auf Basis der erfassten Abmessungen des Parkbereichs die Mehrzahl von Parkzonen für das Kraftfahrzeug bestimmt wird.

Des Weiteren ist möglich, dass ein Wunschabstand, insbesondere ein Sicherheitsabstand, des Kraftfahrzeugs zu zumindest einer Begrenzung des Parkbereichs über die Steuereinrichtung durch den Nutzer eingegeben wird. So ist es dadurch ermöglicht, dass beispielsweise das Kraftfahrzeug so eingeparkt wird, dass der Abstand zu einer den Parkbereich in Breitenrichtung seitlichen Begrenzung auf der Beifahrerseite nur sehr gering gewählt wird, während der Abstand zu einer seitlichen Begrenzung des Parkbereichs auf einer Fahrerseite größer gewählt wird. Bei einer häufigen alleinigen Nutzung des Kraftfahrzeugs kann dann der Kraftfahrzeugführer sehr bequem ein- bzw. aussteigen, da die Fahrertür des Kraftfahrzeugs aufgrund des größeren Abstands zu einer seitlichen Begrenzung des Parkbereichs weiter geöffnet werden kann.

Vorzugsweise befindet sich der Nutzer des Kraftfahrzeugs beim Durchführen des Parkvorgangs bereits außerhalb des Kraftfahrzeugs. Gerade dann kann bei einem vollautonomen Ein-/Ausparken der Abstand zwischen einer Kraftfahrzeugtür und der seitlichen Begrenzung des Parkbereichs sehr gering gewählt werden.

Vorzugsweise ist vorgesehen, dass nach der Auswahl einer Parkzone durch den Nutzer das Kraftfahrzeug zumindest semi-autonom in die ausgewählte Parkzone eingeparkt wird.

In einer vorteilhaften Ausgestaltungsform des Verfahrens werden die Ausmaße des Parkbereichs mittels eines Laserscanners und/oder einer Kamera als Detektionsvorrichtung erfasst. Ebenfalls möglich ist der Einsatz eines LED-Sensors als Detektionsvorrichtung, der ähnliche physikalische Eigenschaften aufweist, wie der Laserscanner. Insbesondere ist dabei vorgesehen, dass die Ausmaße des Parkbereichs mit der Detektionsvorrichtung bereits erfasst werden, wenn das Kraftfahrzeug noch vollständig außerhalb des Parkbereichs sich befindet und noch in einem Mindestabstand zu dem Parkbereich positioniert ist. Gerade durch einen Laserscanner und/oder eine Kamera ist es möglich, bereits bei größeren Abständen zu dem Parkbereich die Ausmaße des Parkbereichs genau zu erfassen. Beispielsweise kann mittels des Laserscanners oder der Kamera bereits bei einer großen Entfernung, beispielsweise von mehr als 5 Metern, insbesondere von mehr als 10 Meter, insbesondere von mehr als 20 Metern, ein Ausmaß des Parkbereichs bestimmt werden. Derartige weitreichige Detektionsvorrichtungen ermöglichen daher schon bei relativ großer Entfernung des Kraftfahrzeugs zu dem Parkbereich eine genaue Bestimmung von Parkzonen, so dass dann auch noch in jede der Parkzonen sicher und ohne umfängliches Rangieren, um eine geeignete Startposition des Kraftfahrzeugs für eine ausgewählte Parkzone zu erreichen, eingeparkt werden kann. Es wird damit verhindert, dass eine Parkzone aufgrund der Nähe des Kraftfahrzeugs zu der Parkzone und aufgrund der Einparkbahn, nicht mehr erreicht werden könnte oder ein zunächst umfängliches Rangieren des Kraftfahrzeugs außerhalb des Parkbereichs erforderlich ist, um eine geeignete Startposition zum Einparken in die ausgewählte Parkzone überhaupt erst erreichen zu können. Dadurch wird der Parkvorgang nach dem Auswählen der Parkzonen auch sehr schnell ermöglicht. Ein derartiges weit entferntes Erfassen eines Parkbereichs ist mit Ultraschallsensoren nicht möglich. Die Kamera kann zusätzlich dazu verwendet werden, um über digitale Signalverarbeitung ein Garagentor, Carport, etc. zu erkennen. Insbesondere bei Garagen kann es unter Umständen sein, dass ein gewisser Bereich, vor allem am Eingang, nicht komplett erkannt wird (z. B. weil das Garagentor einen Bereich verdeckt). Für den Nahbereich können insbesondere Ultraschallsensoren verwendet und dadurch zusätzliche Informationen über den Parkbereich gewonnen werden und in eine Umgebungskarte aufgenommen werden.

Insbesondere wird die Lage und die Anzahl von Parkzonen in Breitenrichtung des Parkbereichs abhängig von der erfassten Breite des Parkbereichs bestimmt. Gerade dies ist eine sehr vorteilhafte Ausführung, das somit in beengteren Parkbereichen, wie es bei einer Garage der Fall ist, mehrere Parkpositionen für das Kraftfahrzeug in Breitenrichtung angeboten werden können und gewählt werden können. Sehr vorteilhaft kann dann eine breitere Garage auch für mehrere Kraftfahrzeuge komfortabel und stellplatzoptimiert genutzt werden, wobei genau dazu die eigenen Interessen der Nutzer besser berücksichtigt werden.

Abhängig von einer ein Ausmaß definierenden Breite des Parkbereichs werden zumindest zwei Parkzonen bestimmt, die in ihrer Breite betrachtet maximal nur bereichsweise überlappend angeordnet sind.

Vorzugsweise wird das Bestimmen der Parkzonen derart durchgeführt, dass dann, wenn die Breite größer oder gleich dem zumindest Doppelten der Breite des zu parkenden Kraftfahrzeugs ist, in Breitenrichtung des Parkbereichs zumindest zwei Parkzonen überlappungsfrei nebeneinander bestimmt werden. Zusätzlich oder anstatt dazu kann dann zumindest eine weitere Parkzone bestimmt werden, die in Breitenrichtung des Parkbereichs maximal bereichsweise mit einer der anderen Parkzonen überlappt. Dadurch wird ein besonders vorteilhaftes Parkmanagement angeboten, um den Parkbereich maximal ausnutzen zu können, und auch nach dem Parken des Kraftfahrzeugs den verbleibenden freien Platz in dem Parkbereich maximal nutzen zu können, beispielsweise zum Abstellen eines weiteren Fahrzeugs und/oder zum Lagern von anderen Gegenständen.

Vorzugsweise wird dann, wenn die Breite des Parkbereichs als kleiner dem Doppelten der Breite des Kraftfahrzeugs jedoch größer der Breite des zu parkenden Kraftfahrzeugs bestimmt wird, ein Bestimmen von zumindest zwei in Breitenrichtung maximal bereichsweise überlappender Parkzonen durchgeführt, wobei die Parkzonen in Breitenrichtung des Parkbereichs jeweils maximal nah an die jeweiligen seitlichen Begrenzungen bestimmt werden. Auch dadurch wird dann bei einer Auswahl einer Parkzone und dem erfolgenden Parken des Kraftfahrzeugs in diese Parkzonen der dann verbleibende freie Platz des Parkbereichs maximiert. Dieses systemseitig erfolgende möglichst nahe Positionieren der Parkzonen zu den jeweiligen seitlichen Begrenzungen kann auch unter Berücksichtigung eines insbesondere nutzerseitig vorgebbaren Mindestabstands der Parkzonen zu eine seitlichen Begrenzung erfolgen.

Es kann auch vorgesehen sein, dass zumindest eine auf der Anzeigeeinheit angezeigte Parkzone durch einen Nutzer individuelle in dem Parkbereich verschoben wird. Beispielsweise kann die Anzeigeeinheit berührsensitiv sein, so dass eine angezeigte Parkzone durch berühren und verschieben auf der Anzeigeeinheit verschoben werden kann, insbesondere in Breitenrichtung des Parkbereichs. Dadurch kann die Nutzerindividualität erhöht werden. Dies ist eine vorteilhafte Ausführung, da somit ein Parkbereich, der deutlich breiter als ein Kraftfahrzeug in seiner Breite ist, und bei welchem eine Einfahröffnung bzw. ein Einfahrbereich des Parkbereichs, durch welche das Kraftfahrzeug in den Parkbereich einfahren kann, deutlich breiter als das Kraftfahrzeug ist, wesentlich besser für positionsoptimiertes Parken ausgenutzt werden kann.

Die Parkzonen werden als Flächen auf der Anzeigeeinheit angezeigt. Beispielsweise kann eine Parkzone als Rechteck auf der Anzeigeeinheit angezeigt werden. Somit kann dem Nutzer auf einfache und leicht wahrnehmbare Art und Weise die Parkzone auf der Anzeige dargestellt werden. Des Weiteren kann somit eine einfache Auswahl der Parkzone durch den Nutzer erfolgen.

Insbesondere kann die Auswahl durch Berühren der Anzeigeeinheit an der Stelle der angezeigten Parkzone erfolgen. Insbesondere ist die Anzeigeeinheit zumindest in dem Bereich berührsensitiv ausgebildet.

Gemäß einer weiteren vorteilhaften Ausgestaltungsform können der Parkbereich und die Parkzonen als Draufsicht auf der Anzeigeeinheit dargestellt werden. Dies ermöglicht eine sehr genaue und übersichtliche sowie intuitiv verständliche Darstellung der Parkbereichssituation und der Parkzonen. Der Nutzer kann dann auf einfache Weise die gewünschte Parkzone in dem Parkbereich auswählen. Des Weiteren kann ein erfasstes Hindernis bzw. dessen Position innerhalb des Parkbereichs auf der Anzeigeeinheit dargestellt werden. Der Nutzer erhält somit einen sehr übersichtlichen Gesamtüberblick über die Parkbereichssituation.

Das semi-autonome oder autonome Einparken wird in einen als Garage ausgebildeten Parkbereich durchgeführt. Insbesondere bei Garagen ist der Platz zum Parken beschränkt, insbesondere durch begrenzende Wände. Gerade dann, wenn auch der Einfahrbereich der Garage sehr breit ist, ergeben sich vielfältige Möglichkeiten, in verschiedenen Positionen in dem Parkbereich zu parken, wobei es gerade dann sehr vorteilhaft ist, mehrere in Breitenrichtung des Parkbereichs anfahrbare Parkzonen angeboten zu bekommen und diese auswählen zu können, so dass das Ausnutzen des gesamten Parkbereichs besonders vorteilhaft erfolgt.

Insbesondere kann somit bei beispielsweise Doppelgaragen mit einem sehr großen Einfahrtor das Einparken nur über die Mitte des Garagentors als einzige erfasste Parkzone verhindert werden, und somit eine unerwünschte Platzverschwendung, die ein Parken anderer Fahrzeuge in einer derartig großen Garage unterbindet, verhindert werden.

Bei der Erfindung oder einer vorteilhaften Ausführung hingegen wird ein auf den Parkbereich abgestimmtes Parkmanagement durchgeführt, in dem systemseitig, falls möglich, mehrere Parkzonen, insbesondere in Breitenrichtung des Parkbereichs bestimmt werden, diese zur Auswahl angeboten werden und dann auch noch nutzindividuell entscheiden werden kann, welche Parkzonen die für den Nutzer geeignetste ist.

Gemäß einer weiteren vorteilhaften Ausgestaltungsform werden die Parkzonen so bestimmt, dass das Kraftfahrzeug mit seiner Längsachse parallel zu einer Tiefe des Parkbereichs orientiert ist. Da das Kraftfahrzeug mit seiner Längsachse, zumindest im Wesentlichen, parallel zu einer Tiefe des Parkbereichs orientiert eingeparkt wird, kann ein einfaches Einparken ohne umfängliches Rangieren und ohne großen Parkraumverlust durchgeführt werden und für das diesbezügliche Parken ausgebildete Parkbereiche können bezüglich ihrer Aufnahmekapazität maximal genutzt werden.

Wenn eine in Breitenrichtung des Parkbereichs den Parkbereich seitlich abschließende Begrenzung als eine Wand mit zumindest einer Höhe größer einem Höhenschwellwert erfasst wird, wird eine Parkzone mit einem Sicherheitsabstand zu dieser Wand bestimmt. Der Sicherheitsabstand kann dabei individuell durch den Nutzer vorbestimmt werden, sodass beispielsweise ein individuelles und komfortables Öffnen einer Fahrzeugtür erreicht ist. Dieser Sicherheitsabstand kann individuell eingestellt werden, sodass auf die Besonderheiten des Parkbereiches, auf die Besonderheiten des Kraftfahrzeugs beziehungsweise auf die Besonderheiten des Nutzers Rücksicht genommen werden kann.

Es kann durch den Höhenschwellwert beispielsweise auch ein dreidimensionaler Körper ab einer vorbestimmten Höhe als zumindest eine Begrenzung erfasst werden. Dies kann beispielsweise der Fall sein, sollte in insbesondere einer Garage zumindest ein weiteres Objekt, beispielsweise Reifen oder Fahrräder oder eine Mülltonne etc. gelagert sein. So können auch derartige Objekte erfasst werden und entsprechend abhängig davon die Lage der Parkzonen bestimmt werden. Ebenfalls möglich ist, dass eine auf einem Boden des Parkbereichs befindliche Linie als eine Begrenzung erfasst wird. Dies kann insbesondere mittels beispielsweise einer Kamera als Detektionsvorrichtung durchgeführt werden, sodass nicht nur dreidimensionale Begrenzungen den Parkbereich begrenzen.

Insbesondere ist dieser Höhenschwellwert größer 10cm, insbesondere zwischen 15cm und 30cm, insbesondere größer oder gleich 55cm. Vorteilhaft ist dieser Höhenschwellwert, da somit gerade Begrenzungen erkannt werden, bei welchem mit einen zu nahen seitlichen Parken eine Fahrzeugtür nicht mehr geöffnet werden könnte, um auch einfach aus dem Kraftfahrzeug aussteigen zu können oder einsteigen zu können. Durch das Erkennen von Begrenzungen mit einer derartigen Mindesthöhe, wird bezüglich der Lage einer Parkzone auch einem komfortablen Aus- und Einsteigen Rechnung getragen.

In einer weiteren vorteilhaften Ausgestaltungsform des Verfahrens kann beim Einparken im Parkbereich mittels einer weiteren Detektionsvorrichtung des Kraftfahrzeugs die Umgebung des Kraftfahrzeugs erfasst werden. Als weitere Detektionsvorrichtung kann beispielsweise zumindest ein Ultraschallsensor vorgesehen sein, der insbesondere einen relativ nahen Bereich, insbesondere im Vergleich zu einem Laserscanner und/oder einem Radarsensor und/oder einer Kamera, um das Kraftfahrzeug detektieren kann. Somit können beispielsweise Bereiche, welche durch einen Detektionsschatten der Detektionsvorrichtung nicht erfasst wurden, mittels der weiteren Detektionsvorrichtung erfasst werden. Gerade dann, wenn das Kraftfahrzeug dann das Parken in die ausgewählte Parkzone durchführt, kann das mit der weiteren Detektionsvorrichtung kontinuierlich überwacht werden, insbesondere bezüglich naher Objekte im Umgebungsbereich.

Gemäß einer weiteren vorteilhaften Ausgestaltungsform kann die Mehrzahl der Parkzonen auf einer fahrzeuginternen Anzeigeeinheit angezeigt werden. Beispielsweise kann es sich bei der Anzeigeeinheit um ein Informationssystem, welches bereits im Kraftfahrzeug integriert ist, handeln. Da derartige Anzeigeeinheiten relativ groß sind, isst eine übersichtliche und leicht wahrnehmbare Darstellung des Parkbereichs mit den Parkzonen und dem Kraftfahrzeug ermöglicht. Auch das Auswählen einer Parkzone ist dann zielsicher ermöglicht.

Gemäß einer weiteren vorteilhaften Ausgestaltungsform kann die Mehrzahl der Parkzonen auf einer Anzeigeeinheit eines mobilen Endgeräts angezeigt werden. Bei dem mobilen Endgerät kann es sich beispielsweise um ein Mobiltelefon handeln, welches insbesondere ein Smartphone sein kann. Somit kann es ermöglicht werden, dass der Nutzer nicht im Kraftfahrzeug sitzen muss, sondern beispielsweise bereits vor dem Einparkvorgang aus dem Kraftfahrzeug ausgestiegen ist und den Parkbereich, insbesondere die Parkzonen, insbesondere die Mehrzahl der Parkzonen, auf dem mobilen Endgerät angezeigt bekommt. Dabei kann beispielsweise auf dem Endgerät eine entsprechende Applikation hinterlegt sein, welche eine Kommunikation mit dem Kraftfahrzeug erlaubt und die Mehrzahl der Parkzonen entsprechend anzeigen kann. Des Weiteren kann insbesondere durch die Verwendung eines Endgeräts auch ein berührungsempfindlicher Bildschirm zur Verfügung gestellt werden, sodass der Nutzer auf einfache Art und Weise die gewünschte Parkzone über das Smartphone auswählen kann. Dadurch kann beispielsweise sichergestellt werden, dass das Kraftfahrzeug sehr nah an eine Begrenzung eingeparkt werden kann, da der Nutzer bereits vor dem autonomen Einparkvorgang aus dem Kraftfahrzeug aussteigen kann, um den Einparkvorgang zu initiieren.

Gemäß einer weiteren vorteilhaften Ausgestaltungsform kann eine der Parkzonen, die auf der Anzeigeeinheit angezeigt wird, von dem Nutzer ausgewählt werden und das Kraftfahrzeug dann in dieser Parkzone zumindest semi-autonom, insbesondere autonom, eingeparkt werden. Mittels dieser Ausgestaltungsform kann es zu einer Komfortsteigerung für den Nutzer kommen.

Die Erfindung betrifft ebenfalls ein Parkassistenzsystem für ein Kraftfahrzeug, das zumindest eine Detektionsvorrichtung und eine Anzeigeeinheit aufweist, wobei das Parkassistenzsystem dazu ausgebildet ist, ein Verfahren gemäß der Erfindung oder einer vorteilhaften Ausführungsform durchzuführen.

Die Erfindung betrifft ebenfalls ein Kraftfahrzeug mit einem Parkassistenzsystem.

Weitere Merkmale ergeben sich aus den Ansprüchen, den Figuren und der Figurenbeschreibung.

Ausführungsbeispiele der Erfindung werden nachfolgend anhand schematischer Zeichnungen näher erläutert.

Dabei zeigen:
- Fig. 1: eine schematische Draufsicht auf ein Ausführungsbeispiel eines erfindungsgemäßen Kraftfahrzeugs mit einem Ausführungsbeispiel eines erfindungsgemäßen Parkassistenzsystems;
- Fig. 2: eine schematische Draufsicht auf das erfindungsgemäßes Kraftfahrzeug mit einem Ausführungsbeispiel eines erfindungsgemäßen Parkassistenzsystem;
- Fig. 3: eine schematische Draufsicht eines Parkbereichs mit einer ersten Parkzone;
- Fig. 4: eine weitere schematische Draufsicht auf den Parkbereich mit einer zweiten Parkzone;
- Fig. 5: eine weitere schematische Draufsicht des Parkbereichs mit einer dritten Parkzone; und
- Fig. 6: eine weitere schematische Draufsicht des Parkbereichs mit der dritten Parkzone und im Vergleich zu Fig. 5 zusätzlichen Objekten im Parkbereich.

In den Figuren werden gleiche oder funktionsgleiche Elemente mit gleichen Bezugszeichen versehen.

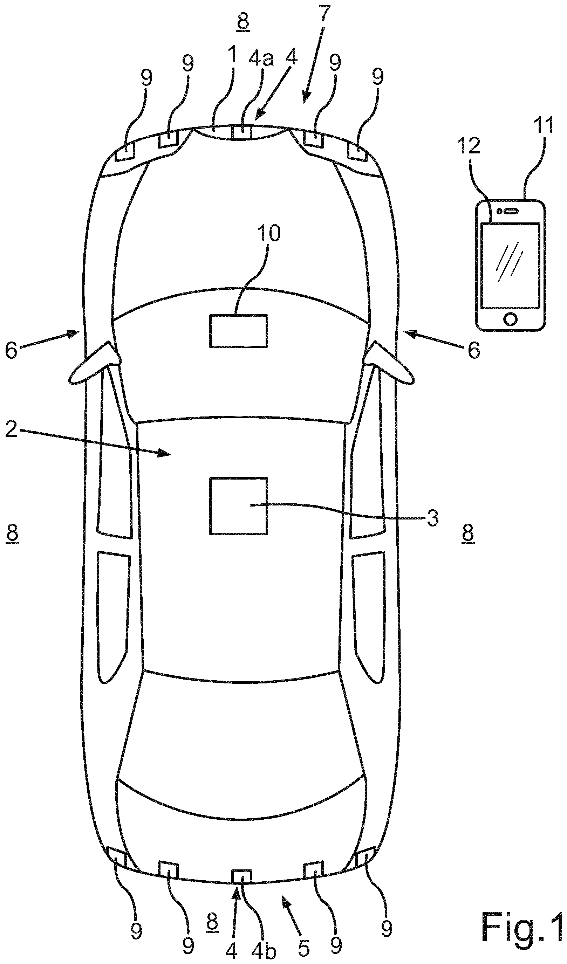

Fig. 1 zeigt ein Kraftfahrzeug 1 gemäß einer Ausführungsform der vorliegenden Erfindung in einer Draufsicht. Das Kraftfahrzeug 1 ist in dem vorliegenden Fall als Personenkraftwagen ausgebildet. Das Kraftfahrzeug 1 umfasst ein Parkassistenzsystem 2. Das Parkassistenzsystem 2 umfasst zumindest eine Steuereinheit 3, die beispielsweise durch ein elektronisches Steuergerät des Kraftfahrzeugs 1 gebildet sein kann. Darüber hinaus umfasst das Parkassistenzsystem 2 zumindest eine Detektionsvorrichtung 4. In dem vorliegenden Ausführungsbeispiel umfasst das Parkassistenzsystem 2 eine Detektionsvorrichtung 4, die beispielsweise zumindest einen Laserscanner und/oder zumindest eine Kamera aufweist. Zum Beispiel ist ein erster Laserscanner 4a und ein zweiter Laserscanner 4b ausgebildet.

Vorliegend ist in einem Heckbereich 5 der zweite Laserscanner 4b angeordnet und der erste Laserscanner 4a ist in einem Frontbereich 7 des Kraftfahrzeugs 1 angeordnet. Des Weiteren weist das Kraftfahrzeug 1 zwei Seitenbereiche 6 auf. Die Anzahl und die Anordnung der Laserscanner 4a, 4b als Teil des Parkassistenzsystems 2 sind vorliegend rein beispielhaft zu verstehen. Es können zusätzlich dazu weitere Laserscanner 4a, 4b vorgesehen sein, die beispielsweise an zumindest einem Seitenbereich 6 des Kraftfahrzeugs 1 angeordnet sind. Des Weiteren ist es möglich, dass eine Mehrzahl von Laserscannern 4a, 4b an den jeweiligen Bereichen 5, 6, 7 des Kraftfahrzeugs 1 angeordnet sein kann. Die Anordnung der Laserscanner 4a, 4b ist hier rein beispielhaft und nicht abschließend zu sehen. Die Laserscanner 4a, 4b können dabei insbesondere jeweils so verbaut sein, dass sie an einem individuellen Kraftfahrzeugbauteil montiert sind. Ein Kraftfahrzeugbauteil kann beispielsweise ein Stoßfänger oder eine Motorhaube oder eine geeignete sonstige Verkleidung des Kraftfahrzeugs 1 sein. Die Kraftfahrzeugbauteile sind lediglich beispielhaft zu verstehen und es können auch anderweitige Kraftfahrzeugbauteile vorliegen.

Mit den Laserscannern 4a, 4b wird eine Umgebung 8 des Kraftfahrzeugs 1 erfasst. Insbesondere können die Laserscanner 4a, 4b derart angeordnet sein, dass sie in diesem Ausführungsbeispiel zum Erfassen der Umgebung 8 vor einem Frontbereich 7 des Kraftfahrzeugs 1 und hinter einem Heckbereich 5 des Kraftfahrzeugs 1 angeordnet sind. Die durch die Laserscanner 4 erfassten Informationen können an die Steuereinheit 3 übermittelt werden, wobei die Steuereinheit 3 beispielsweise mit einer Anzeigeeinheit 10 gekoppelt ist, und durch die Steuereinheit 3 ausgewertete Informationen auf der Anzeigeeinheit 10 dargestellt werden können. Ebenfalls möglich ist, dass ein mobiles Endgerät 11 mit dem Parkassistenzsystem 2 kommunizieren kann und auf einer Anzeigeeinheit 12 des mobilen Endgeräts 11 die Informationen der Steuereinheit 3 zusätzlich oder anstatt dazu angezeigt werden können. Somit ist es möglich, dass auch außerhalb des Kraftfahrzeugs 1 die Informationen angezeigt werden können.

Die Laserscanner 4a, 4b sind insbesondere dazu ausgebildet, dass sie bereits bei einer größeren Entfernung, beispielsweise größer 5 Meter, insbesondere größer 10 Meter, insbesondere auch größer als 20 Meter, ein Objekt in der Umgebung 8 erfassen können. Zur Erfassung des Nahbereichs des Kraftfahrzeugs 1 ist insbesondere eine weitere Detektionsvorrichtung 9 an dem Kraftfahrzeug 1 verbaut. Insbesondere kann die weitere Detektionsvorrichtung 9 zumindest einen, vorzugsweise mehrere, in diesem Ausführungsbeispiel zumindest acht Ultraschallsensoren 9 aufweisen, welche insbesondere den Nahbereich in der Umgebung 8, beispielsweise innerhalb von 4 Metern zu einem Ultraschallsensor, erfassen können.

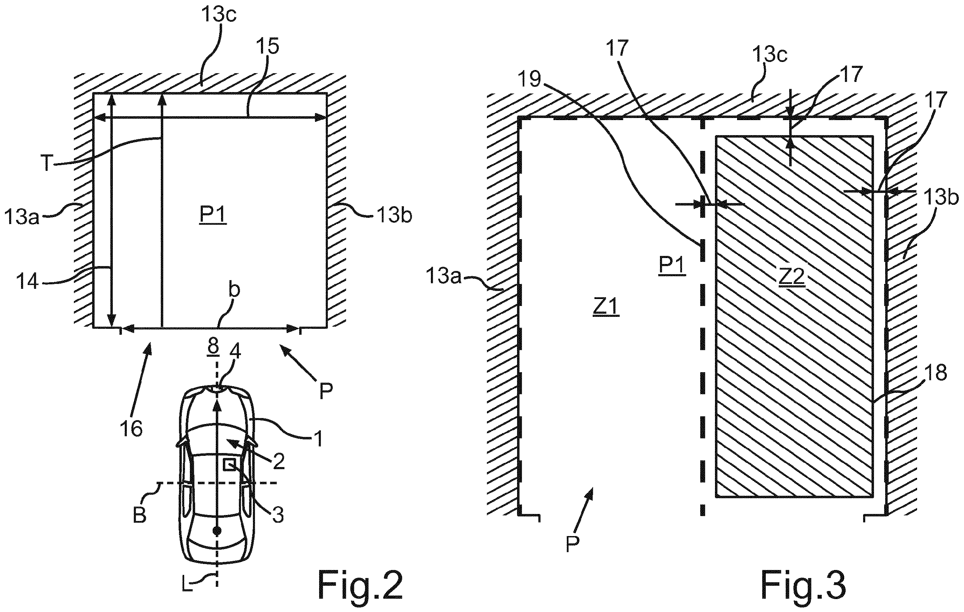

Fig. 2 zeigt eine Draufsicht auf eine Parksituation, wie sie beispielsweise auf einer Anzeigeeinheit 9, 12 angezeigt sein kann. Das Kraftfahrzeug 1 ist hier vor einem Parkbereich P und vollständig außerhalb des Parkbereichs P positioniert und insbesondere mit einer dem Parkbereich P nächstliegenden Seite, insbesondere dem Frontbereich 7, in einem Abstand größer 10 Meter zu einer hinteren Begrenzung 13c des Parkbereichs P positioniert. Der Parkbereich P ist in seiner Breitenrichtung durch seitliche Begrenzungen 13a, 13b begrenzt. In Tiefenrichtung ist der Parkbereich durch die weitere Begrenzung 13c begrenzt.

Insbesondere kann der Parkbereich P eine Garage sein, was in Fig. 2 veranschaulicht ist. Insbesondere sind dann die Begrenzungen 13a, 13b und 13c Wände. Insbesondere weist der Parkbereich P in einem Bodenbereich P1 Abmessungen auf, die eine Tiefe 14 des Parkbereichs P und eine Breite 15 des Parkbereichs P sind. Der Parkbereich P ist dabei so ausgebildet, dass die Tiefe 14 mindestens einer Fahrzeuglänge entlang einer Fahrzeuglängsachse L des Kraftfahrzeugs 1 entspricht und die Breite 15 des Parkbereichs P größer als die Breite entlang einer Fahrzeugquerachse B des Kraftfahrzeugs 1 ist.

Der Parkbereich P weist eine Einfahröffnung bzw. eine Einfahrt 16 auf, wobei die Breite b der Einfahrt 16 kleiner sein kann als die Breite 15 des Parkbereichs P. Mittels des Laserscanners 4a kann insbesondere die Tiefe 14 und die Breite 15 des Parkbereichs P auch schon in dieser relativ weit entfernte Position des Kraftfahrzeugs 1 zu dem Parkbereich P erfasst werden. In Fig. 2 ist das Kraftfahrzeug 1 mit dem Frontbereich 7 dem Parkbereich P zugewandt, so dass ein Vorwärtsparken erfolgen soll. Insbesondere ist das Kraftfahrzeug 1 vorzugsweise so positioniert, dass die Fahrzeuglängsachse L parallel oder im Wesentlichen parallel zu der Tiefe 14 orientiert ist.

Die Fig. 2 bis 5 zeigen Ausführungsbeispiele der Erfindung, bei dem der Einparkvorgang durch eine Vorwärtsbewegung des Kraftfahrzeugs 1 durchgeführt wird. Analoges gilt beispielsweise auch bei einem Einparkvorgang, welcher in Rückwärtsbewegung des Kraftfahrzeugs 1 durchgeführt wird.

Fig. 2 zeigt, dass das Kraftfahrzeug 1 vollständig außerhalb des Parkbereichs P angeordnet ist. Somit kann beispielsweise ein Nutzer bereits vor dem Einparkvorgang aus dem Kraftfahrzeug 1 aussteigen. Der Einparkvorgang kann semi-autonom oder vollautonom durchgeführt werden. Bei dem Parkbereich P handelt es sich in diesem Ausführungsbeispiel, wie bereits dargelegt, vorzugsweise um eine Garage, sodass in dem in Fig. 2 gezeigten Ausführungsbeispiel die Begrenzungen 13a, 13b und 13c insbesondere durch Wände gebildet sind.

Vorzugsweise wird eine Begrenzung nicht nur in ihrer Art, dass sie eine Begrenzung ist, erkannt, sondern auch in ihrer Höhe. Gerade dann, wenn eine Höhe einer Begrenzung einen Höhenschwellwert, der beispielsweise größer oder gleich 20 cm vorgegeben sein kann, übersteigt, ist es auch möglich, dass ein seitlicher Abstand des Kraftfahrzeugs 1 zu einer seitlichen Begrenzung 13a, 13b, derart ist, dass ein komfortables Öffnen einer Fahrzeugtür zum Ein- und Aussteigen gegeben ist.

Ebenfalls möglich ist, dass alternativ oder ergänzend zum Laserscanner 4a, 4b eine Kamera an dem Kraftfahrzeug 1 angeordnet ist und beispielsweise eine auf dem Boden befindliche Linie als Begrenzung 13 durch die Kamera erfasst wird und von der Steuereinheit 3 als seitliche Begrenzung 13 erkannt wird, wenn der Parkbereich P keine Garage ist.

In den Fig. 3 bis 6 sind Draufsichten gezeigt, die auf der Anzeigeeinheit 10, 12 angezeigt sein können. Die einzeln dargestellten Situationen können vorzugsweise gerade bezüglich der bestimmten Parkzonen in dem Parkbereich P gleichzeitig auf der Anzeigeeinheit 10, 12 angezeigt werden, so dass alle bestimmten Parkzonen gleichzeitig im Parkbereich P dargestellt sind. Zur besseren Unterscheidbarkeit, gerade wenn einige Parkzonen bereichsweise überlappend sind, können die Parkzonen mit unterschiedlicher Farbe und/oder unterschiedlicher Schraffierung dargestellt werden.

Fig. 3 zeigt eine Draufsicht auf den Parkbereich P. Der Parkbereich P ist dabei so ausgebildet, dass das Kraftfahrzeug 1 bezüglich seiner Breite zumindest zweimal in dem Parkbereich P (der Breite nach gesehen) nebeneinander eingeparkt werden könnte. In Fig. 3 ist hier eine mögliche Parkzone Z2 als Rechteck gezeigt.

Dabei kann diese Parkzone Z2 als eine Fläche 18 in dem Parkbereich P dargestellt werden. Die Fläche 18 ist dabei so orientiert, dass sie ein Längseinparken des Kraftfahrzeugs 1 in Richtung einer Tiefenrichtung T des Parkbereichs P vorgibt. Das Kraftfahrzeug 1 bzw. die Fläche 18 befindet sich in einem vorher manuell eingegeben bzw. vorbestimmten Sicherheitsabstand 17 zu zumindest einer der Begrenzung 13a, 13b, 13c. es kann auch vorgesehen sein, das die Fläche 18 grundsätzlich mit einer derartigen Größe bestimmt wird, dass das Kraftfahrzeug 1 mit einer derartigen Öffnungsweite einer Fahrzeugtür, die an einem in der Draufsicht rechtsseitigen Seitenbereich 6 schwenkbar angeordnet ist, darin Platz findet, so dass die Fläche 18 in einem derartigen Fall dann auch direkt angrenzend an die Begrenzung 13b und/oder 13c angezeigt sein kann.

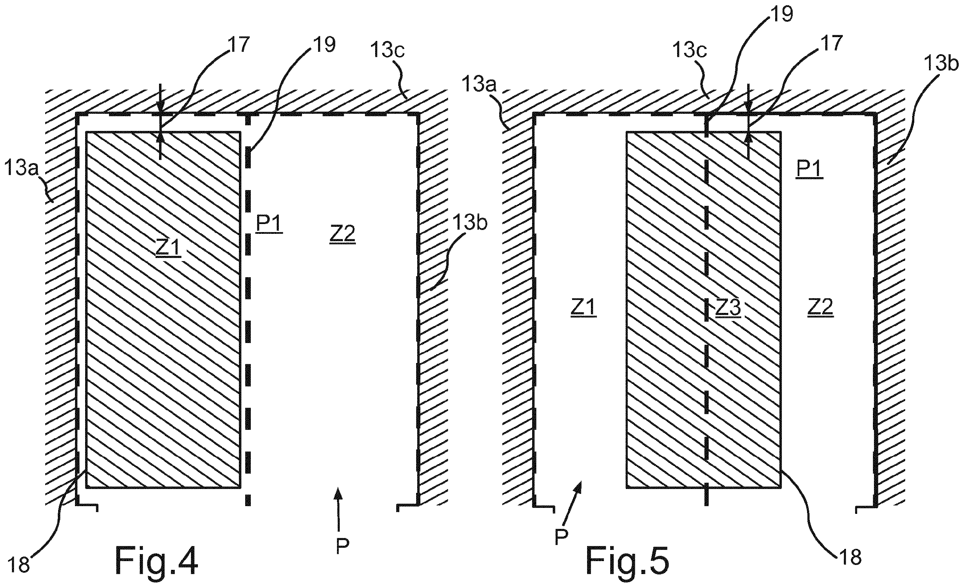

Fig. 4 zeigt analog zu Fig. 3 eine Draufsicht in welcher aufgrund der Breite 15 des Parkbereichs P eine weitere Parkzone Z1 dargestellt ist, die in Breitenrichtung des Parkbereichs P überlappungsfrei zur Parkzone Z2 positioniert ist. Hierbei ist die Fläche 18 der Parkzone Z1 angezeigt und weist entsprechende Sicherheitsabstände 17 zu den Begrenzungen 13a und 13c auf.

Fig. 5 zeigt eine Draufsicht auf eine weitere Parkzone Z3 mit der Fläche 18. Diese Parkzone Z3 ist mittig bezüglich der Breite 15 des Parkbereichs P und wäre bei überlagerter Darstellung der Parkzonen Z1 bis Z3 maximal bereichsweise überlappend mit der Parkzone Z1 und maximal bereichsweise überlappend mit der Parkzone Z2, jeweils in Breitenrichtung des Parkbereichs P betrachtet. Der Sicherheitsabstand 17 ist hier nur der rückseitigen Begrenzung 13c gegeben.

Die gezeigten Parkzonen Z1 bis Z3 sind in Anzahl und Lage beispielhaft und können auch anderweitig positioniert sein. Bevorzugt sind diese Parkzonen Z1 und Z2 bezüglich ihrer örtlichen Lage im Parkbereich P jedoch dahingehend, dass der Bodenbereich P1 maximal genutzt werden kann, wenn zusätzlich zu dem Kraftfahrzeug 1 noch ein weiteres größeres Objekt abgestellt werden soll. Soll der Ausstieg oder der Einstieg beidseits des Kraftfahrzeugs 1 jedoch maximal komfortabel sein, kann die Parkzone Z3 die bevorzugte sein. Bevorzugt ist die Parkzone Z3 mittig zu einer in Breitenrichtung betrachtet Mittellinie 19 des Parkbereichs P.

Somit kann beispielsweise sichergestellt werden, dass ein an der Begrenzung 13 abgestellter Gegenstand 20, insbesondere eine Vielzahl an dynamischen Gegenständen 20, nicht beschädigt werden können, sodass auch in größeren Garagen, bei denen beide seitlichen Begrenzungen 13 mit Gegenständen 20 belegt sind, das Kraftfahrzeug 1 noch einparken kann.

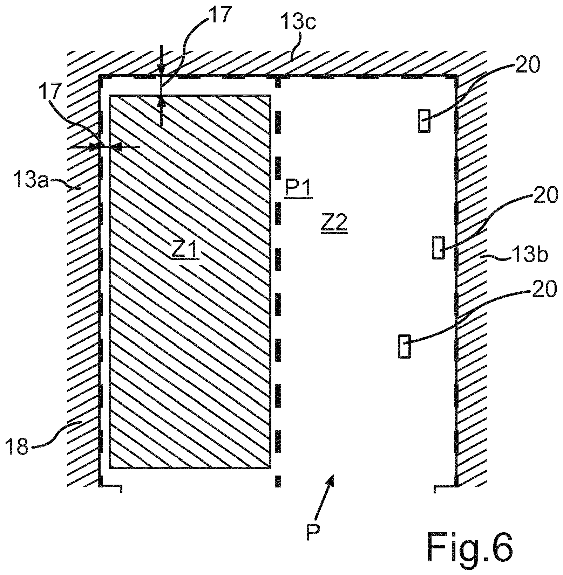

In Fig. 6 ist in einer weiteren Draufsicht der Parkbereich gemäß Fig. 5 gezeigt, wobei hier zusätzlich weitere Objekte 20, insbesondere auf dem Bodenbereich P1 angeordnet sein können. Die Objekte 20 können bewegbare Objekte, wie ein Fahrrad oder ein Motorrad oder eine Mülltonne oder ein Rasenmäher etc. sein. Es kann jedoch auch ein Schrank etc. sein. Auch das kann dann an der Anzeigeeinheit 10, 12 angezeigt sein. Hier ist dann der rechtsseitige Bereich des Parkbereichs P belegt und kann nicht zum Parken des Kraftfahrzeugs 1 genutzt werden. Es sind daher nur Parkzonen möglich, die linksseitig von den Objekten 20 bestimmt werden können. Zusätzlich zu der gezeigten Parkzonen Z1 wäre auch noch zumindest die Parkzone Z3 möglich, wohingegen die Parkzone Z2 hier nicht möglich wäre.

In Fig. 3 bis Fig. 6 ist ebenfalls dargestellt, dass insbesondere ein Einparken des Kraftfahrzeugs 1 im Wesentlichen zur Längsachse L des Kraftfahrzeugs 1 parallel zur Tiefe 14, insbesondere zu den seitlichen Begrenzungen 13a, 13b, durchgeführt wird.

Im nachfolgenden wird anhand der Fig. 2 bis 5 ein Ausführungsbeispiel des erfindungsgemäßen Verfahrens beschrieben.

Bei einer Annäherung des Kraftfahrzeugs 1 an den Parkbereich P wird mittels des Laserscanners 4a, 4b die Umgebung 8 des Kraftfahrzeugs 1 erfasst. Beispielsweise kann der Fahrer des Kraftfahrzeugs 1 mittels einer Starvorrichtung im Kraftfahrzeug 1 das Erfassen des Parkbereichs P initiieren. Dies kann beispielsweise durch das Drücken eines Knopfes im Kraftfahrzeug 1 erfolgen bzw. ist es ebenfalls möglich, dass beispielsweise über ein GPS-Signal, welches der Startvorrichtung angibt, in der Nähe des Parkbereichs P zu sein, das Erfassen des Parkbereichs P erfolgt. Fig. 2 zeigt dabei insbesondere, wie das Kraftfahrzeug 1 vollständig außerhalb des Parkbereichs P angeordnet ist. Das Kraftfahrzeug 1 ist dabei derart vor dem Parkbereich P positioniert, dass der Parkbereich P mittels des Laserscanners 4a im Frontbereich 7 den Parkbereich P erfasst wird. Insbesondere kann das Erfassen des Parkbereichs P bereits bei einer Entfernung von beispielsweise mehr als 20m durchgeführt werden, so dass beispielsweise insbesondere auch die Breite b der Einfahrt 16 erfasst wird und bei der Bestimmung der möglichen Parkzonen Z1 bis Z3 insbesondere berücksichtigt wird und dann auch für eine Parktrajektorie in die ausgewählte Parkzone Z1, Z2, Z3 berücksichtigt wird.

Insbesondere werden mittels des Laserscanners 4a die Breite 15 und Tiefe 16 des Parkbereichs P erfasst. Der Laserscanner 4a erkennt die Begrenzungen 13a, 13b, 13c sowie die Breite b der Einfahrt 16 und ermittelt daraus diese Ausmaße des Parkbereichs P. Insbesondere auf einem Speichermedium, beispielsweise des Parkassistenzsystems 2, sind insbesondere die die Ausmaße Länge, Breite und Höhe des Kraftfahrzeugs 1 gespeichert. Basierend auf den erfassten Ausmaßen des Parkbereichs P und basierend auf Ausmaßen, insbesondere Breite und Länge, des Kraftfahrzeugs 1 werden die Mehrzahl der Parkzonen Z1, Z2, Z3 bestimmt. Es sei nochmals erwähnt, dass die drei Parkzonen Z1, Z2, Z3 lediglich beispielhaft zu verstehen sind, bezüglich den Kriterien maximale Flächenausnutzung des Bodenbereichs P1 für mehrere abzustellende Gegenstände und/oder maximaler Komfort beim Zugang zum Kraftfahrzeug 1 von beiden Längsseiten die bevorzugten sind.

Die systemseitig automatisch bestimmten Parkzonen werden dann auf der Anzeigeeinheit 10 und/oder 12 angezeigt. So ist vorgesehen, dass bei den Situationen ohne die Objekte 20, alle drei Parkzonen Z1, Z2 und Z3 angezeigt werden und zur Auswahl angeboten werden. Ist die Situation wie in Fig. 6 gegeben, so wird insbesondere nur die Parkzone Z1 und die Parkzone Z3 angezeigt. Die Objekte 20 werden insbesondere auch auf der Anzeigeeinheit 10, 12 angezeigt.

Insbesondere werden die Parkzonen Z1, Z2, Z3 gleichzeitig auf der Anzeigeeinheit 10, 12 angezeigt. Durch insbesondere Berühren der Anzeigeeinheit 10, 12 an der Stelle, an der die gewünschte Parkzone Z1, Z2, Z3 angezeigt wird, wird diese dann ausgewählt. Es kann vorgesehen sein, dass die Auswahl akustisch und/oder optisch bestätigt wird. Beispielsweise kann die ausgewählte Parkzone blinken und/oder die Farbe wechseln. Es wird dann das Parken in diese ausgewählte Parkzone zumindest semi-autonom durchgeführt.

Beispielsweise können die Parkzonen Z1, Z2, Z3 mittels einer Wischbewegung auf der berührungsempfindlichen Anzeigeeinheit 10, 12 nutzerindividuell auch verschoben werden und somit ihre Lage im Parkbereich P verändert werden.

Bei dem Parkvorgang kann die Umgebung zusätzlich oder anstatt der Detektionsvorrichtung 4 mit der weiteren Detektionsvorrichtung überwacht werden. Die vorzugsweise dazu vorhandenen Ultraschallsensoren 9 erfassen dabei insbesondere den Nahbereich der Umgebung 8 insbesondere in einem Bereich von bis 4m.

Das Verfahren kann selbstverständlich analog bei einem Ausparkvorgang bzw. bei einem Rückwärtsparkvorgang angewendet werden.

## Patentansprüche

1. Verfahren zum Durchführen eines zumindest semi-autonomen Parkvorgangs eines Kraftfahrzeugs (1) in einen Parkbereich (P), wobei Ausmaße (14, 15) des Parkbereichs (P) mit zumindest einer Detektionsvorrichtung (4) des Kraftfahrzeugs (1) erfasst werden,
wobei abhängig von den erfassten Ausmaßen (14, 15) des Parkbereichs (P) und abhängig von Ausmaßen des Kraftfahrzeugs (1) eine Mehrzahl von Parkzonen (Z1, Z2, Z3) für das Kraftfahrzeug (1) in dem Parkbereich (P) bestimmt wird und die Mehrzahl der Parkzonen (Z1, Z2, Z3) an einer Anzeigeeinheit (10, 12) angezeigt wird und durch einen Nutzer einer der angezeigten Parkzonen (Z1, Z2, Z3) ausgewählt wird,
wobei abhängig von einer als Ausmaß charakterisierten Breite (15) des Parkbereichs (P) zumindest zwei Parkzonen (Z1, Z2, Z3) bestimmt werden, die in ihrer Breite betrachtet maximal nur bereichsweise überlappend angeordnet sind, wobei die Parkzonen (Z1, Z2, Z3) als Flächen (18) auf der Anzeigeeinheit (10, 12) angezeigt werden, **dadurch gekennzeichnet, dass**
das zumindest semi-autonome Einparken in einen als Garage ausgebildeten Parkbereich (P) durchgeführt wird, wobei dann, wenn als eine seitliche Begrenzung (13a, 13b) des Parkbereichs (P) eine Wand mit zumindest einer Höhe größer einem Höhenschwellwert erfasst wird, eine Parkzone (Z1, Z2, Z3) mit einem Sicherheitsabstand (17) zu dieser Wand bestimmt wird.

2. Verfahren nach Anspruch 1,
**dadurch gekennzeichnet, dass**
die Ausmaße des Parkbereichs (P) mittels zumindest eines Laserscanners (4a, 4b) und/oder eines LED-Sensors und/oder einer Kamera als Detektionsvorrichtung (4) erfasst werden.

3. Verfahren nach einem der vorhergehenden Ansprüche,
**dadurch gekennzeichnet, dass**
der Parkbereich (P) und die Parkzonen (Z1, Z2, Z3) als Draufsicht auf der Anzeigeeinheit (10, 12) dargestellt werden.

4. Verfahren nach einem der vorhergehenden Ansprüche,
**dadurch gekennzeichnet, dass**
die Parkzonen (Z1, Z2, Z3) so bestimmt werden, dass das Kraftfahrzeug (1) mit seiner Längsachse (L) parallel zu einer Tiefe (14) des Parkbereichs (P) orientiert ist.

5. Verfahren nach einem der vorhergehenden Ansprüche,
**dadurch gekennzeichnet, dass**
beim Einparken in den Parkbereich (P) mittels einer weiteren Detektionsvorrichtung (9) des Kraftfahrzeugs (1) die Umgebung (8) des Kraftfahrzeugs (1) erfasst wird.

6. Verfahren nach einem der vorhergehenden Ansprüche,
**dadurch gekennzeichnet, dass**
die Mehrzahl der Parkzonen (Z1, Z2, Z3) auf einer fahrzeuginternen Anzeigeeinheit (10) angezeigt wird.

7. Verfahren nach einem der vorhergehenden Ansprüche,
**dadurch gekennzeichnet, dass**
die Mehrzahl der Parkzonen (Z1, Z2, Z3) auf einer Anzeigeeinheit (12) eines mobilen Endgeräts (11) angezeigt wird.

8. Verfahren nach einem der vorhergehenden Ansprüche,
**dadurch gekennzeichnet, dass**
eine der Parkzonen (Z1, Z2, Z3), die auf der Anzeigeeinheit (10, 12) angezeigt wird, von dem Nutzer ausgewählt wird, und das Kraftfahrzeug (1) dann in diese Parkzone (Z1, Z2, Z3) zumindest semi-autonom, insbesondere autonom, eingeparkt wird.

9. Parkassistenzsystem (2) für ein Kraftfahrzeug (1), das zumindest eine Detektionsvorrichtung (4) und eine Anzeigeeinheit (10, 12) aufweist, wobei das Parkassistenzsystem (2) zum Durchführen eines Verfahrens nach den Ansprüchen 1 bis 8 ausgebildet ist.

10. Kraftfahrzeug (1) mit einem Parkassistenzsystem (2) nach Anspruch 9.

## Claims

1. Method for carrying out an at least semi-autonomous parking process of a motor vehicle (1) into a parking area (P), wherein dimensions (14, 15) of the parking area (P) are sensed with at least one detection device (4) of the motor vehicle (1), wherein a multiplicity of parking zones (Z1, Z2, Z3) for the motor vehicle (1) in the parking area (P) is determined as a function of the sensed dimensions (14, 15) of the parking area (P) and as a function of dimensions of the motor vehicle (1), and the multiplicity of parking zones (Z1, Z2, Z3) is displayed on a display unit (10, 12) and selected by a user of one of the displayed parking zones (Z1, Z2, Z3),
wherein at least two parking zones (Z1, Z2, Z3) which are arranged at maximum only partially overlapping when considered in their width are determined as a function of a width (15), characterized as a dimension, of the parking area (P), wherein the parking zones (Z1, Z2, Z3) are displayed as areas (18) on the display unit (10,12)
**characterized in that**
the at least semi-autonomous parking is carried out into a parking area (P) which is embodied as a garage, wherein when a wall with at least one height greater than a height threshold value is sensed as a lateral boundary (13a, 13b) of the parking area (P), a parking zone (Z1, Z2, Z3) with a safety distance (17) from this wall is determined.

2. Method according to Claim 1,
**characterized in that**
the dimensions of the parking area (P) are sensed by means of at least one laser scanner (4a, 4b) and/or one LED sensor and/or one camera as a detection device (4).

3. Method according to one of the preceding claims,
**characterized in that**
the parking area (P) and the parking zones (Z1, Z2, Z3) are illustrated as a plan view of the display unit (10, 12).

4. Method according to one of the preceding claims,
**characterized in that**
the parking zones (Z1, Z2, Z3) are determined in such a way that the motor vehicle (1) is oriented with its longitudinal axis (L) parallel to a depth (14) of the parking area (P).

5. Method according to one of the preceding claims,
**characterized in that**
during parking into the parking area (P), the surroundings (8) of the motor vehicle (1) are sensed by means of a further detection device (9) of the motor vehicle (1).

6. Method according to one of the preceding claims,
**characterized in that**
the multiplicity of parking zones (Z1, Z2, Z3) are displayed on a vehicle-internal display unit (10).

7. Method according to one of the preceding claims,
**characterized in that**
the multiplicity of parking zones (Z1, Z2, Z3) are displayed on a display unit (12) of a mobile terminal (11).

8. Method according to one of the preceding claims,
**characterized in that**
one of the parking zones (Z1, Z2, Z3) which is displayed on the display unit (10, 12) is selected by the user, and the motor vehicle (1) is then parked into this parking zone (Z1, Z2, Z3), at least semi-autonomously, in particular autonomously.

9. Parking assistance system (2) for a motor vehicle (1), which has at least one detection device (4) and one display unit (10, 12), wherein the parking assistance system (2) is designed to carry out a method according to Claims 1 to 8.

10. Motor vehicle (1) having a parking assistance system (2) according to Claim 9.

## Revendications

1. Procédé pour réaliser une manœuvre de stationnement au moins semi-autonome d'un véhicule automobile (1) dans une aire de stationnement (P), des dimensions (14, 15) de l'aire de stationnement (P) étant acquises par au moins un dispositif de détection (4) du véhicule automobile (1),
une pluralité de zones de stationnement (Z1, Z2, Z3) étant déterminées pour le véhicule automobile (1) dans l'aire de stationnement (P) en fonction des dimensions (14, 15) acquises de l'aire de stationnement (P) et en fonction des dimensions du véhicule automobile (1) et la pluralité de zones de stationnement (Z1, Z2, Z3) étant affichées sur une unité d'affichage (10, 12) et l'une des zones de stationnement (Z1, Z2, Z3) affichées étant sélectionnée par un utilisateur,
au moins deux zones de stationnement (Z1, Z2, Z3) étant déterminées en fonction d'une largeur (15) de l'aire de stationnement (P) **caractérisée** en tant que dimension, qui, vues dans leur largeur, sont disposées en ne se chevauchant au maximum que dans certaines régions, les zones de stationnement (Z1, Z2, Z3) étant affichées en tant que surfaces (18) sur l'unité d'affichage (10, 12), **caractérisé en ce que**
l'entrée en stationnement au moins semi-autonome est effectuée dans une aire de stationnement (P) réalisée sous la forme d'un garage, et lorsqu'un mur ayant au moins une hauteur supérieure à une valeur de seuil de hauteur est détecté en tant que délimitation latérale (13a, 13b) de l'aire de stationnement (P), une zone de stationnement (Z1, Z2, Z3) avec un écart de sécurité (17) par rapport à ce mur étant alors déterminée.

2. Procédé selon la revendication 1, **caractérisé en ce que** les dimensions de l'aire de stationnement (P) sont acquises au moyen d'au moins un appareil de balayage à laser (4a, 4b) et/ou un capteur à LED et/ou une caméra en tant que dispositif de détection (4).

3. Procédé selon l'une des revendications précédentes, **caractérisé en ce que** l'aire de stationnement (P) et les zones de stationnement (Z1, Z2, Z3) sont représentées vues de dessus sur l'unité d'affichage (10, 12).

4. Procédé selon l'une des revendications précédentes, **caractérisé en ce que** les zones de stationnement (Z1, Z2, Z3) sont déterminées de telle sorte que le véhicule automobile (1) est orienté avec son axe longitudinal (L) parallèle à une profondeur (14) de l'aire de stationnement (P).

5. Procédé selon l'une des revendications précédentes, **caractérisé en ce que** lors de l'entrée en stationnement dans l'aire de stationnement (P), l'environnement (8) du véhicule automobile (1) est détecté au moyen d'un dispositif de détection supplémentaire (9) du véhicule automobile (1) .

6. Procédé selon l'une des revendications précédentes, **caractérisé en ce que** la pluralité de zones de stationnement (Z1, Z2, Z3) sont affichées sur une unité d'affichage (10) interne au véhicule.

7. Procédé selon l'une des revendications précédentes, **caractérisé en ce que** la pluralité de zones de stationnement (Z1, Z2, Z3) sont affichées sur une unité d'affichage (12) d'un terminal mobile (11).

8. Procédé selon l'une des revendications précédentes, **caractérisé en ce que** l'une des zones de stationnement (Z1, Z2, Z3) qui est affichée sur l'unité d'affichage (10, 12) est sélectionnée par l'utilisateur et le véhicule automobile (1) est alors entré en stationnement dans ces zones de stationnement (Z1, Z2, Z3) au moins de manière semi-autonome, notamment de manière autonome.

9. Système d'assistance au stationnement (2) pour un véhicule automobile (1), lequel possède au moins un dispositif de détection (4) et une unité d'affichage (10, 12), le système d'assistance au stationnement (2) étant configuré pour mettre en œuvre un procédé selon l'une des revendications 1 à 8.

10. Véhicule automobile (1) équipé d'un système d'assistance au stationnement (2) selon la revendication 9.
